# EUROPEAN PATENT APPLICATION

(11) **EP 2 316 585 A1**
(43) Date of publication of application: **04.05.2011**
(21) Application number: 10189278.4
(22) Date of filing: 28.10.2010
(51) Int. Cl.: B09B 3/00, B29B 17/00, B32B 5/16, B32B 9/00, B32B 21/12

(54) **Fabrication method for the production of a construction element, construction element and related production apparatus**

(30) Priority: 28.10.2009 IT PN20090062
(71) Applicant: Snaidero Rino S.p.A., 33030 Maiano (UD) (IT)
(72) Inventor: Snaidero, Edi, 33030, Majano (Udine) (IT)
(74) Representative: Petruccelli, Davide

(57) **Abstract**

The present invention relates to a process of manufacturing a structural element, and also concerns a panel obtained with said process and a production apparatus for the application of said process.
The manufacturing process according to the present invention involves:
a) providing a mass of dried municipal waste including:
- 5 to 35% paper-based material;
- 10 to 50% polymeric material;
- up to 5% inert material;

b) drying and micronizing said mass of dried municipal waste (2) to obtain a micronized mass (3);
c) incorporating in said micronized waste (3) a binding agent (17) in powder form in a quantity of up to 50% to obtain at least a homogeneous mixture (6);
d) spreading said mixture (6) onto a plane in one or more layers to form a mattress (13);
e) pressing said mattress (13) at a temperature suitable to melt said binding agent (17) in powder form to obtain said panel (8).

Also claimed are a panel obtained with said process and an apparatus for the production of said panel.

## Description

The present invention relates to a process for manufacturing a structural element, in particular a panel, usable as a covering element for walls, floors, etc., and in some products for the production of furnishing articles such as furniture pieces, doors, and the like. The invention also regards a panel made with said process and a production apparatus for the application of said process.

In the field of production of panels for covering walls and/or for manufacturing furnishing elements it is a well-known practice to use panels made with materials designed to substitute solid wood, such as chipboard panels, plywood panels, and low-density, high-density and medium-density fibreboard panels made of wood fibres, also known with the respective acronyms LDF, HDF and MDF panels. These types of panels are made from wood particles, or chips, that are first subjected to grinding processes and to which are then added sawdust, glue and additives such as urea resins. The dried material is placed inside forms so as to obtain a kind of mat that is pressed, squared, cut into plates and submitted to sanding.

It is known that such panels exhibit numerous faults, such as for example a high specific weight, the tendency to absorb moisture, causing undesirable swelling, and toxic and/or polluting fumes that are released during the hot-forming of the panels and during the life of the panel, due to the effect of the evaporation of the solvents present in the binding agents used to bind the wood chips.

A further problem of the above-mentioned panels lies in their manufacture, which requires the use of considerable quantities of virgin wood with evident impact on the environment due to the deforestation required to obtain the raw material. In fact, only about 20% of the wood chips for the production of MDF panels comes from manufacturing scrap and waste. This is due not only to the capacity of using salvaged wood and to the quantities of such material available, but also to the necessity of obtaining finished panels having good mechanical characteristics by utilizing fibres that have already been used for other purposes and to a large degree denatured.

To obviate the above-mentioned drawbacks, panel manufacturing methods using low-cost scrap material as an alternative to wood and having mechanical properties suitable for use in the field of production of furniture elements have been proposed. A process of the above type is disclosed in EP 2 072 156 A1, in which a panel that can be used for the construction of furniture articles is made by using a mass of dried municipal waste that is substantially micronized, strewn to form a mat, hot-pressed so as to melt the polymeric material contained within said mass of dried municipal waste, and the semifinished product thus obtained is then impregnated with a binding agent and submitted again to a drying phase to remove the liquid component of the binder.

The process proposed in EP 2 072 156 A1 presents some drawbacks. One of these lies in the fact that, to give the finished panel mechanical properties that are suitable to allow its use in the field of production of furnishing elements, such as doors, furniture articles, etc., it is necessary to utilize considerable quantities of binding agent in liquid form to completely impregnate the semifinished article obtained by pressing the mass of dried municipal waste and subsequently dry the liquid part of the binder for several hours, which implies not only a considerable energy expenditure but also a considerably long process time for the production of a panel.

On the other hand, the use of a binding agent in the liquid state proposed in EP 2 072 156 A1 cannot be replaced with the use of binders in a different state, for example, in a solid state, since said binder must impregnate the interstices of a solid structure, or of the semifinished product. A further drawback lies therefore in the impossibility of using binders that are different from soluble ones.

Further, in the production process proposed in EP 2 072 156 A1 it is not possible to incorporate the binding agent before pressing the mattress of the mass of combustible waste to bring the polymeric portion of said mass to the melting point and to create a structure that is at least partially aggregated. This is due to the fact that the mass of binding agent that would be mixed with the micronized combustible waste would contain a substantial quantity of solvent, which, hot-pressed together with the mass of combustible waste to obtain a panel, would evaporate at such a rate as to entail considerable shrinkages in the panel being formed, as well as deep cracks and unevennesses. Therefore, the forming of a panel through the process proposed in EP 2 072 156 A1 cannot be achieved unless a mattress-like structure is first at least partially aggregated and only afterwards such structure is impregnated with a binding agent in liquid form. Evidently, the processing times will inevitably be quite long.

One purpose of the present invention is to provide a process for manufacturing a panel that resolves the drawbacks of prior art manufacturing processes.

In the scope of the above purpose, one objective of the present invention is to provide a manufacturing process using materials alternative to wood to produce a panel that can be used as a covering element for walls, floors, etc., and in some products useful in the production of furnishing articles such as furniture pieces, doors and the like.

A further objective of the present invention is to provide a process for manufacturing a panel having process times considerably shorter than the prior art processes.

Still another objective of the present invention is to provide a manufacturing process that makes it possible to obtain a panel having a plurality of layers of different compositions.

A further objective of the present invention consists of providing a manufacturing process that makes it possible to reduce the consumption of economic and energy resources compared with prior art panel production methods.

Still another objective of the invention is to provide a panel having a relatively low specific weight, said panel being usable as a soundproofing element and/or as a support for cold-laminated panels.

A further but not least objective of the present invention is to provide a production apparatus that enables an effective and economic application of the process for the production of a structural element according to the invention.

The purpose and objectives disclosed above are achieved by a manufacturing process having the characteristics stated in the attached claim 1, by a panel having the characteristics specified in claim 7, and by a production apparatus according to claim 11. Characteristics and advantages of the invention will become evident from the description which follows and with reference to the drawings, wherein:
- Figure 1 is a cross-sectional view of a first embodiment of a panel according to the present invention;
- Figure 2 is a cross-sectional view of a second embodiment of a panel according to the present invention;
- Figure 3 is a cross-sectional view of a third embodiment of a panel according to the present invention;
- Figure 4 is a cross-sectional view of a fourth embodiment of a panel according to the present invention;
- Figure 5 illustrates schematically a production apparatus of a panel according to the present invention.

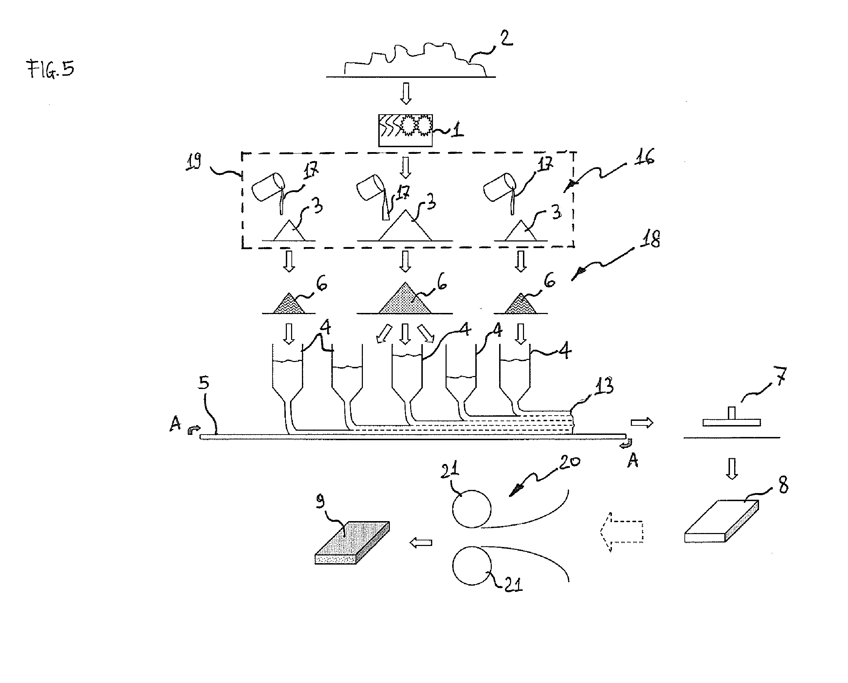

The manufacturing process according to the present invention envisages substantially the preparation of a mass of dried municipal waste 2 (Figure 5) having a suitable composition and the aggregation of such material by means of a binding agent in solid form.

The mass of dried municipal waste 2, that is, the waste from which the moist fraction (agricultural waste, food waste, etc.) has been eliminated, has on the average the following composition:

| **COMPOSITION** | **Weight %** |
|---|---|
| PAPER-BASED MATERIAL | 5-35 |
| POLYMERIC MATERIAL | 10-50 |
| INERT MATERIAL | <5 |
| MISCELLANEOUS/NON CLASSIFIABLE MATERIAL | 10-85 |

According to the present invention a mass 2 of dried municipal waste is dried at a temperature of about 200°C in a suitable drying unit 1 (Figure 5). The mass 2 of waste is then micronized in machines equipped with adjacent rotating disks whose position can be adjusted to modify the grain size of the micronized material.

A quantity of up to 50% in weight of a binding agent 17 in powder form is incorporated into the mass of dry micronized municipal waste 3 so as to obtain a homogeneous mixture 6. The powder of binding agent 17 may be incorporated into the micronized mass 3 by means of a mixer 19. The binding agent 17 in powder form is preferably made up of a resin of thermoplastic or thermosetting type according to the requirements of production and/or use of the finished panel.

According to a preferred embodiment, to obtain a plurality of portions 18 of mixtures 6 characterized by different weight percentages of the content of binding agent 17 the mass of micronized waste 3 is first subdivided into a plurality of portions 16 and each of said portions 16 is subjected to an independent mixing with the desired quantity of binding agent 17 in powder form. As will be better described below, the plurality 18 of mixtures 6 with different binding content 17 will be used to manufacture a panel comprising layers of different compositions.

After the mixture 6 has been composed, it is spread on a belt conveyor 5 (Figure 5). The mixture 6 may be spread out evenly by a single pouring device 4 so as to form a mattress 13 of homogeneous consistency, or, in the case in which a plurality of portions 18 of mixtures 6 is available, each of said portions may be spread out on the belt conveyor 5 by means of different shedding devices 4 operating with different flow rates, so that the mattress 13 thus formed will have a structure consisting of layers that may be of different thicknesses.

The mattress 13, consisting of one or more layers, formed by the shedding devices 4 is conveyed to a press 7 which compresses it and at the same time heats it to such a temperature as to cause the melting of the binding agent 17 and thus forming a panel 8, that may be made up of different layers. It is possible to have a further binding action by choosing a pressing temperature for the mattress 13 suitable to bring about not only the melting of the binding agent 17 but also the, at least partial, melting of the polymeric material present in the portion of waste 6 made up of the mass of dry waste 2.

The panel 8 obtained as described above may be used as it is, as a building element to soundproof masonry structures such as partition walls, ceilings and floors. The same panel 8 may also be used as support on which may be applied decorative sheets such as wood and/or polymeric sheets, cardboard and the like, applicable with the help of cold glues, considering that the panel 8 is not sufficiently resistant at temperatures higher than 150°C. The laminated panel 9 may be used in some applications in the furnishing field, for example, to build wardrobe doors, kitchen cabinet tops and the like.

With reference to Figure 5, an apparatus for the production of a panel according to the present invention includes a drying and micronizing unit 1 that dries and grinds a mass of dried municipal waste 2 according to a degree of residual moisture and grain size adjustable as may be required. The drying and micronizing unit 1 may be equipped with a plurality of separating elements that subdivide the mass of micronized waste 3 into different portions 16. A mixer 19 is provided to receive one or more of said portions 16 of the mass of micronized waste 3 and to mix said portions 16 with a quantity of binding agent in dust form 17, thus obtaining one or more portions 18 of homogeneous mixtures 6. The quantity of binding agent 17 may be suitably measured out in proportions up to 50% in weight, using metering means associated with the mixer 19.

Each of the mixtures 6 made up of binding agent 17 and a mass of micronized waste 3 is conveyed to a plurality of shedding devices 4 which are arranged in a position corresponding to a belt conveyor 5 that receives the material poured from such devices 4 to form a mattress 13. These devices are arranged one after the other in the direction of movement of the conveyor 5 indicated by the arrows A in Figure 5, so that the mattress 13 formed will have the form of a structure comprising one or more layers. The number of layers and their thickness depends on the selective activation of the shedding devices 4 and on their number, as well as on the flow of material they deliver.

As will be seen below in the description of a few embodiments, the present production apparatus makes it possible to form single-layer panels of homogeneous composition and panels having layers differing in number, thickness and composition. In this manner, the finished panel may be used to make an article of furniture, such as for example a furniture piece, a wardrobe, etc., but also to line walls for soundproofing purposes.

The mattress 13 formed on the belt conveyor 5 is carried toward a press 7 for the final hot-forming of the panel 8.

The production apparatus may also be equipped with a lamination device 20, comprising a plurality of rollers 21, in which the panel 8 is received and laminated on both sides with suitable materials such as sheets of wood, paper or possibly polymeric material. In the device 20, the lamination is carried out with the help of cold bonding agents to avoid compromising the structure of the panel 8 that acts as support for manufacturing a laminated panel 9.

Below are described four examples of embodiments of panels made with the procedure according to the present invention. The quantity of basic components that make up such panels, referred to one cubic metre of finished product, are the following:

| **COMPONENT** | **QUANTITY (% in weight)** |
|---|---|
| Paper-based material | 5% - 35% |
| Polymeric material | 10% - 50% |
| Inert material | Up to 5% |
| Non-classifiable material | 10% - 85% |
| Binding agent in powder form | Up to 50% |

The above percentage compositions of the panel includes only dry fractions or materials without wet parts.

### EXAMPLE 1

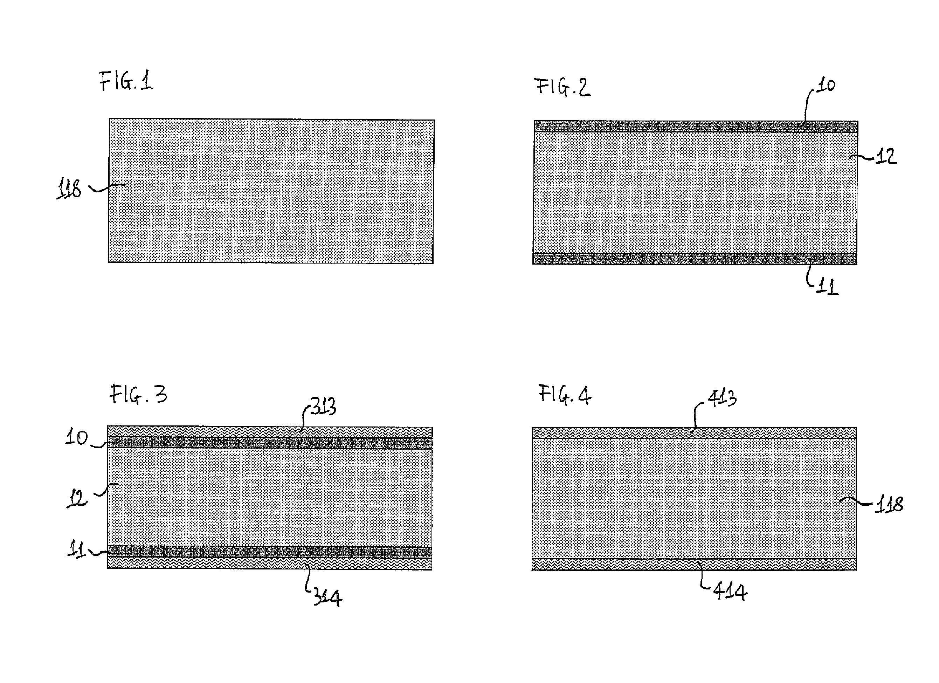

With reference to Figure 1, a mass of dried municipal waste compressed between 450 kg and 900 kg, dried and micronized is combined and mixed homogeneously with a quantity between 225 kg and 450 kg of bonding agent in powder form. The mixture 6 so formed is spread out by one or more of the shedding devices 4 shown in Figure 5 onto the belt conveyor 5 so as to form a single-layer mattress 13 in which the mixture 6 is homogeneously distributed. The mattress 13 thus formed is pressed at a temperature suitable to melt the powder of binding agent, thus obtaining a panel 8 having a single layer 118.

The binding agent consists preferably of a thermosetting resin or a thermoplastic resin in powder form. The variation in the quantities of the mass of waste and of the binding agent makes it possible to obtain panels having different mechanical properties and suitable in particular for uses of the panel as soundproofing element for lining walls or for manufacturing furniture articles.

### EXAMPLE 2

With reference to Figure 2, a second embodiment of the panel comprises a layered structure obtained by laying on the belt conveyor 5 illustrated in Figure 5 three mixtures 6 having different compositions. The mixtures 6 of different composition are obtained by subdividing into three portions the mass of dried and micronized waste 3. Each portion 16 is charged with a different quantity of binding agent in powder form 17 and mixed. In the embodiment illustrated in Figure 2, two portions 16 of mass 3 were mixed with the same quantity of binding agent 17, while one of the three portions 16 of mass 3 were mixed with a percentage in weight of binding agent in powder form lower than that of the above two portions 16. The portion 16 of mixture having a lower percentage content of binding agent 17 is laid by means of one of the shedding devices 4 so as to form a layer 12 included between two peripheral layers 10 and 11 containing a greater percentage in weight of binding agent 17. The layered mattress 13 is hot-pressed in the press 7 to obtain the panel having the structure shown in Figure 2.

Naturally, also the percentage content of binding agent 17 in each of the more external layers 10, 11 of the panel of Figure 2, as well as the total number of layers, can be different depending on the usage requirements for the panel. Thus, the layers can be in an even or odd number and their composition may also be different from layer to layer.

### EXAMPLE 3

Figure 3 shows a third embodiment of a panel according to the invention. The panel of Figure 3 is made starting from the panel of Figure 2 described in the second Example of embodiment by overlapping on the more external layers 10, 11 a pair of sheets 313, 314 of lignocellulosic material. The application of the layers 313 and 314 is carried out through the cold lamination of the panel of Figure 2 in the lamination device 20 shown in Figure 5.

### EXAMPLE 4

A fourth embodiment of a panel according to the invention is obtained substantially according to what has been already described with reference to the first and the third embodiment. Substantially, the single-layer panel 118, produced on the basis of what was described in the first embodiment and shown in Figure 1, is cold-laminated in the lamination device 20 shown in Figure 5 to apply two sheets of paper-based material 413, 414. In this case, too, the application of the sheets 413 and 414 is carried out without heating the layer 118 in order not to compromise its structure.

It has thus been ascertained how the invention achieved the predetermined task and objectives, as a manufacturing process has been realized for a panel suitable for room soundproofing and for some applications in the production of elements for furnishing articles, which effectively utilizes materials salvaged from dry and undifferentiated municipal waste, contributing to the reduction of the deforestation that is necessary for the production of panels of known type.

It has also been ascertained that a panel made with the process according to the present invention results in a reduction of process times and in a considerable reduction in energy consumption compared with methods of production of known type currently used in manufacturing panels. Moreover the panel according to the invention has the advantage of allowing the use of binding agents in powder form.

## Claims

1. Fabrication method for producing a panel **characterized by** comprising following steps:
a) supplying a mass of dry combustible refuse (2) including:
- 5 to 35 weight percent of paper-based material,
- 10 to 50 weight percent of polymeric material,
- up to 5 weight percent of inert material;
b) drying and micronizing said mass of dry combustible refuse (2) to form a micronized mass (3);
c) incorporating a quantity up to 50 weight percent of a binding agent (17) in powder form into said micronized mass (3) for forming an homogeneous mixture (6).
d) spreading said mixture (6) in one or several layers over a planar surface so as to form a mattress (13);
e) pressing said mattress (13) at a temperature adapted to melt said binding agent (17) in powder form so as to obtain said panel (8).

2. Fabrication method for producing a panel according to claim 1, wherein said mass of dry combustible refuse (2) is comprised between 450 kg and 900 kg per cubic metre of finished product.

3. Fabrication method for producing a panel according to claim 1 or 2, wherein said binding agent in powder form is a resin of a thermosetting or thermoplastic type.

4. Fabrication method for producing a panel according to any of the preceding claims, wherein said step b) includes subdividing said micronized mass (3) into a plurality of portions (16) and step c) is carried out for each of said portions (16).

5. Fabrication method for producing a panel according to any of the preceding claims, wherein said step d) performs the forming of a mattress (13) comprising a plurality of layers each containing a different weight percentage of binding agent (17).

6. Fabrication method for producing a panel according to any of the preceding claims, wherein the panel (8) formed in step e) is subject to a cold rolling process for covering it with one or more layers (313, 314; 413, 414) of lignocellulosic or polymeric material.

7. Panel, in particular for room soundproofing and for making furniture articles, obtained with a fabrication method according to any of claims 1 to 6, said panel being composed only by dry fractions that comprise:
- an amount of paper-based material ranging from 5 to 35 weight percent;
- an amount of polymeric material ranging from 10 to 50 weight percent;
- an amount of inert material up to 5 weight percent,
- an amount of binding agent up to 50 weight percent.

8. Panel according to claim 7 comprising a layered structure, wherein layers (10, 11, 12; 118; 313, 314; 413, 418) have a concentration of binding agent (17) which differs from layer to layer.

9. Panel according to claim 7 or 8 comprising at least one covering layer (313, 314; 413, 414;) made of a lignocellulosic or polymeric material.

10. Use of a panel according to any of the claims 7 to 9 in the production of furniture pieces or for room soundproofing.

11. Apparatus for the production of a panel according to any of the claims 7 to 9, **characterized by** comprising a drying and micronizing unit (1), a mixing unit (19), a conveyor belt (5) arranged in correspondence to a plurality of shedding devices (4) adapted to spread at least one mixture (6) of material over said conveyor belt (5) to form a mattress (13) thereupon, said shedding devices (4) being arranged in a sequence following each other in the moving direction of said conveyor belt (5) and being arranged upstream of a pressing unit (7).

12. Apparatus according to claim 11, wherein a rolling device (20) is provided downstream of said pressing unit (7).
